# EUROPÄISCHE PATENTSCHRIFT

(11) **EP 2 318 244 B1**
(45) Veröffentlichungstag und Bekanntmachung des Hinweises auf die Patenterteilung: **11.11.2015**
(21) Anmeldenummer: 09782313.2
(22) Anmeldetag: 28.08.2009
(51) Int. Cl.: B60T 8/1755, B62D 15/02, B60W 30/12

(54) **VORRICHTUNG UND VERFAHREN ZUR STABILISIERUNG EINES LANE KEEPING SUPPORT SYSTEMS**
DEVICE AND METHOD FOR STABILIZING A LANE KEEPING SUPPORT SYSTEM
DISPOSITIF ET PROCÉDÉ DE STABILISATION D UN SYSTÈME D'AIDE AU SUIVI DE VOIE

(30) Priorität: 01.09.2008 DE 102008041727
(43) Veröffentlichungstag der Anmeldung: 11.05.2011
(73) Patentinhaber: Robert Bosch GmbH, 70442 Stuttgart (DE)
(72) Erfinder: BUERKLE, Lutz, 71229 Leonberg (DE); RENTSCHLER, Tobias, 75180 Pforzheim (DE); APP, Thomas, 75015 Bretten (DE)
(86) Internationale Anmeldenummer: PCT/EP2009/061113
(87) Internationale Veröffentlichungsnummer: WO 2010/023266

(56) Entgegenhaltungen:
- DE-A1-102005 049 071
- US-A- 5 979 581
- US-B1- 6 308 123

## Beschreibung

### Stand der Technik

Die Erfindung geht aus von einer Vorrichtung oder Verfahren nach Gattung der unabhängigen Ansprüche. Aus der DE 101 37 292 A1 ist ein Lane Keeping Support (LKS) System bekannt, welches insbesondere eine Reglerstruktur zeigt, bei der ein unterstützendes Drehmoment errrechnet wird, welches über einen Servo-Motor auf die Lenkung einwirkt. Aufgrund von technischen bzw. systembedingten Beschränkungen, insbesondere dieses genannten Stellgliedes (Servo-Motor), kann es bei einem derart geregelten System zu Instabilitäten, insbesondere Schwingungen, kommen, die aufgrund des Verlassens des linearen Regelbereichs entstehen können. Dies ist z.B. dann der Fall, wenn die Kraft des Stellglieds begrenzt wird, um einem Fahrer die Möglichkeit zu geben, eine gößere (manuelle) Gegenkraft aufzubringen.

Die DE 10 2005 049 071 A1 zeigt ein LKS-System mit verbesserter Spurführung, bei dem der Umgang mit einem Lenkeingriff des Fahrers gelehrt wird. Ab dem Beginn des Lenkeingriffs wird das Ausgangssignal begrenzt (eingefroren) und nach Beendigung auf einen Normwert gesetzt.

### Offenbarung der Erfindung

Das erfindungsgemäße Verfahren, bzw. Vorrichtung, mit den Merkmalen des unabhängigen Anspruchs hat demgegenüber den Vorteil, dass eine Instabilität des Reglers zur Erzeugung des Lenkradmoments, bzw. Lenkradwinkels für den Querlenkungseingriff vermieden wird, indem die Sollkrümmung mithilfe des Rückkopplungspfads derart beeinflusst wird, dass die Regelung fortwährend in linearen Arbeitspunkten betrieben wird. Die Rückkopplungsgröße bestimmt sich aus der Begrenzungsdifferenz, d.h. der Differenz zwischen dem Stellwert mit und ohne Begrenzung.

Der Regler kann hierbei auch kaskadiert ausgelegt sein. In einem instabilen Zustand kann das Gesamtsystem zu schwingen anfangen, derartige Probleme sind aus der Regelungstechnik hinreichend bekannt. Bei der Anwendung eines LKS-Systems kann dies beispielsweise zu einer schlingernden Kurvenfahrt führen, sofern das LKS-System das Fahrzeug im nicht linearen Regelbereich um die Kurve lenkt.

Da der Lenkwinkel, und damit die Krümmung der gefahrenen Trajektorie, üblicherweise zu keinem Zeitpunkt einen bestimmten Wert übersteigen kann, wie im Folgenden erläutert, führt eine schlingernde Kurvenfahrt zu einem größeren (mittleren) Kurvenradius, als dies der Fall wäre, wenn das LKS-System gerade noch im linearen Grenzbereich regelt. Durch das Vermeiden des Schlingerns mittels des beschriebenen Verfahrens, ist es vorteilhaft, engere Kurvenradien fahren zu können. Der resultierende Lenkwinkel bzw. das Drehmoment des Stellgliedes bzw. Aktors wird auf diese Weise als Folge des Eingangssignals genauso begrenzt. In diesem Fall fährt das Fahrzeug die Trajektorie mit der maximalen Krümmung, die linear regelbar ist.

Das genannte Schwingen, bzw. Schlingern bezieht sich auf den Verlauf der Fahrzeugtrajektorie. Diese Schwingungseffekte können beispielsweise von Windeinflüssen, dem Luftdruck vorbeifahrender Fahrzeuge oder Straßeneinflüsse verstärkt werden. Für den Fahrer bedeutet das Schwingen seines Fahrzeugs, auch wenn es vielleicht technisch nicht als sicherheitskritisch anzusehen ist, ein unangenehmes oder sogar angsteinflößendes Fahrgefühl. Dies könnte zu unvorhersehbaren Reaktionen des Fahrers oder anderer Verkehrsteilnehmer führen, die durch die schlingernde Fahrweise abgelenkt werden können, und somit ein erhöhtes Sicherheitsrisiko darstellen.

Vorteilhaft ist eine Begrenzung der Stellgröße aus mehreren Gründen. Soll dem Fahrer die Möglichkeit gegeben werden, das LKS-System zu übersteuern, so darf dieses kein höheres Drehmoment, bzw. Kraft, auf die Lenkung ausüben, als der Fahrer im Stande wäre, eine Gegenkraft hierzu aufzubringen. Weiterhin ergibt sich eine Beschränkung durch die mechanische Auslegung des Stellgliedes, so kann nicht jedes theoretisch angeforderte Drehmoment vom Aktor umgesetzt werden. Um die mechanischen Grenzen des Stellgliedes nicht auszureizen und damit Nichtlinearitäten im Grenzbereich zu vermeiden, bzw. auch die Lebensdauer des Stellgliedes zu erhöhen, wird erfindungsgemäß eine künstliche, bzw. synthetische Begrenzung eingeführt. Diese synthetische Begrenzung wird üblicherweise mit einem Vorhalt gegenüber der Begrenzung des Stellgliedes beaufschlagt, so dass die mechanischen Begrenzungen nie erreicht werden. Durch die künstliche Begrenzung kann ein vorausbestimmbares Verhalten erreicht werden, mit dem eine deterministische Korrektur möglich ist, ohne sich irgendwelche ungewollten physikalischen Effekte aus dem mechanischen Grenzbereich einzuhandeln. Weiterhin kann dadurch der Sensor zur Rückmessung des Stellmoments am Stellglied eingespart werden.

Vorteilhafter Weise wird das Differenzsignal der Begrenzung im Rückkopplungszweig gefiltert, um sanfte Regelungsübergänge zu ermöglichen und ein parasitäres Schwingen zu verhindern. Idealerweise kommt hierfür ein PT1-Glied, bzw. Tiefpassfilter 1. Ordnung zum Einsatz, welches zusätzlich mit einem Rückkoppelfaktor gewichtet wird. Um dieses lineargewichtete Signal wird das Sollwert, beispielsweise die Sollkrümmung, reduziert. Filter und Gewichtungsfaktor sind derart zu applizieren, dass das erfindungsgemäße Verfahren Wirkung zeigt, und der Stellwert im Grenzbereich nicht weiter erhöht wird.

Vorteilhafter Weise lässt sich die Rückkopplung durch einen Fahrereingriff unterbrechen und somit ein Übergang zu einer Open-Loop-Lösung erreichen. Lenkt der Fahrer also mit, so wird aus dem geregelten System ein gesteuertes System. Dies ist unter dem Hintergrund wichtig, dass üblicherweise gewünscht wird, dass der Fahrer die Hohheit über das Fahrzeug behält und Regelungseingriffe in diesem Fall außer Kraft gesetzt oder vermindert werden. Es ist implementierungsabhängig, ob eine derartige Unterbrechung zu einem Zurücksetzen der Momentanwerte der Regelungsparameter führt, oder nur zu einer Aussetzung der Regelung unter Beibehaltung der letzten Regelungsparameter.

### Begriffserläuterungen

Der Stellwert ist vorliegend der Wert, der in das Stellglied, beispielsweise den Servo-Motor für die Lenkung, einwirkt. Als physikalische Größen sind hierfür beispielsweise das Lenkungsdrehmoment, der Lenkwinkel oder abgeleitete Größen denkbar. In der Schrift ist beispielhaft das Verfahren für die Behandlung des Dremhoments beschrieben.

Die Sollkrümmung ist die Krümmung der Trajektorie, der das Fahrzeug idealerweise folgen sollte. In der Regel wird dies die Mitteltrajektorie einer Fahrspur sein.

Unter der maximal linear regelbaren Krümmung wird die Krümmung der Trajektorie verstanden, zu der es kommt, wenn das Stellglied gerade noch im linearen Bereich arbeitet und regelt. Eine solche Grenztrajektorie ist im folgenden unter dem Bezugszeichen 13 zu sehen.
Es wird versucht ein Überschreiten des Werteberichs (linearer Betriebsbereich) des Stellglieds zu vermeiden. Dieser Wertebereich ist beispielsweise durch die Spezifikation (z.B. des Servomotors) bekannt.

### Zeichnungen

Ausführungsbeispiele der Erfindung sind in den Zeichnungen dargestellt und in der nachfolgenden Beschreibung näher erläutert. Es zeigen
Figur 1 die erfindungsrelevanten Trajektorien eines Fahrzeugs,
Figur 2 den erfindungsrelevanten Ausschnitt eines LKS-Regelkreises mit Sollwertkompensation.

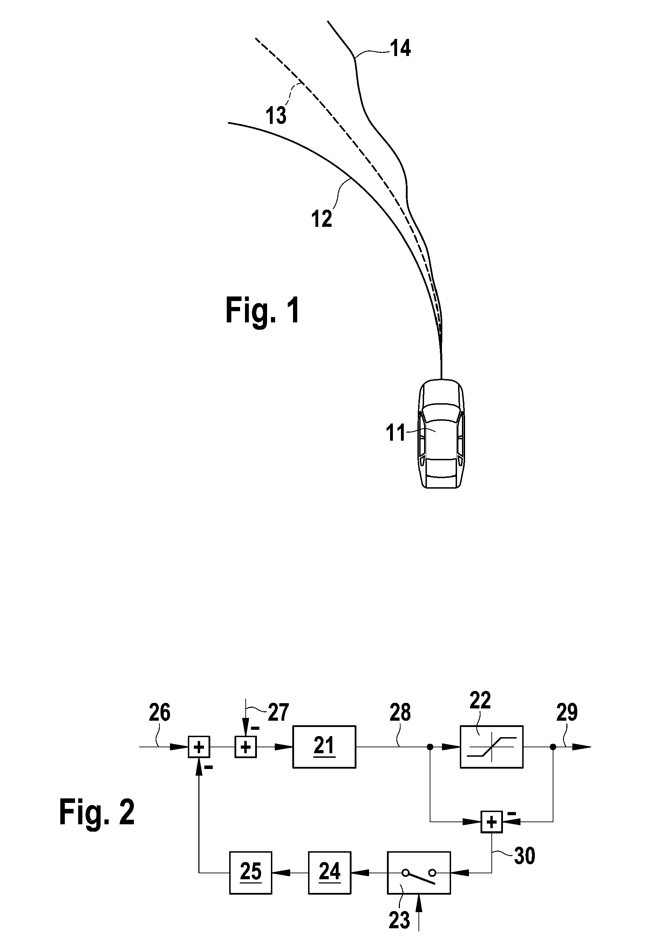

In der Figur 1 werden theoretische bzw. praktische Fahrverläufe dargestellt, die ein Fahrzeug 11 durchlaufen kann. Die Trajektorie 12 entspricht einer Wunsch- bzw. Solllinie mit der dazugehörigen Sollkrümmung, in der Praxis beispielsweise einem scharfen Kurvenverlauf. Die Trajektorie 14 stellt einen schlingernden Fahrverlauf dar, wie er im nichtlinearen Regelbetrieb auftreten könnte. Die Trajektorie 13 stellt die Krümmung dar, die mit dem erfindungsgemäßen Verfahren im linear geregelten Bereich, also dem Bereich, in dem die Begrenzung gerade noch nicht greift, maximal erreichbar wäre.

In Figur 2 ist ein Ausschnitt aus einem LKS-Regelkreis mit Sollwertkompensation gezeigt, in der vom Sollwert, also der Sollkrümmung 26 die Istkrümmung der Lenkung 27 subtrahiert wird und als Eingangsgröße in die Momentenregelung 21 eingeht. Der aus dieser bereits bekannten Regelung berechnete Stellwert, also das Lenkradmoment 28, geht in den erfindungsgemäß vorgesehenen Begrenzer 22 ein, der nun den eigentlichen Stellwert 29, der an das Stellglied weitergereicht wird, bestimmt. Aus der Begrenzungsdifferenz zwischen 28 und 29 resultiert die wesentliche Größe für die Rückkopplung 30, die mittels eines Filters 24 und einer Gewichtung 25 auf die Sollgröße 26 rückgekoppelt wird. Der Fahrereingriffsschalter 23 deaktiviert die Rückkopplung.

Ggf. wird die zurückgekoppelte Begrenzungsdifferenz, die die physikalische Einheit des Moment besitzt, im Rückkopplungszweig in eine entsprechende Krümmung (mit der physikalischen Einheit der Krümmung) zurückgerechnet, die eine dem Moment äquivalenten Größe entspricht. Dies kann auch Teil der Gewichtung (25) sein.
Der Begrenzer (22) wird derart gewählt, bzw. dessen Kennline derart ausgelegt, dass er den technischen Grenzen des Stellers erfindungsgemäß Genüge leistet. Beispielsweise kann er einen linearen Verlauf in dem Momentenbereich besitzen, in dem der Steller im linearen Regelbereich arbeiten würde und eine Deckelung (Konstantfunktion) ab dem Eingangsmoment (29), in dem er die lineare Regelung verlassen würde. Welche Grenzen das sind, kann beispielsweise aus der Spezifikation des Stellgliedes abgelesen werden oder auch mittels eines geeigneten Verfahrens rückgemessen werden, z.B. mittels eines weiteren (nicht dargestellten) Rückkopplungszweiges, der den Begrenzer (22) regelt.

## Patentansprüche

1. Verfahren zur Vermeidung einer Instabilität/Stabilisierung (14) eines Reglers für ein LKS-System,
- wobei eine Regelung zur Fahrzeugquerführung (21)
- mit einer Begrenzung (22)
- auf eine Sollkrümmung (26) der Fahrzeugtrajektorie rückgekoppelt ist
und
- eine Begrenzungsdifferenz (30)
- über einen Rückkopplungszweig
- derart auf die Sollkrümmung (26) wirkt,
**dadurch gekennzeichnet, dass**
- diese Sollkrümmung der maximal linear regelbaren Krümmung (13) entspricht und
- die Begrenzung (22) derart gewählt wird, dass die Stellgröße (29) des Reglers an die technischen Grenzen des Stellglieds für die Fahrzeugquerführung angepasst ist.

2. Verfahren nach Anspruch 1, **dadurch gekennzeichnet, dass**
- die Begrenzung (22) derart gewählt wird, dass die Stellgröße (29) an die technischen Grenzen des Stellglieds inklusive eines Vorhalts angepasst ist.

3. Verfahren nach einem der vorigen Ansprüche, **dadurch gekennzeichnet, dass**
- die Begrenzung (22) derart gewählt wird, dass eine Lenkkraft des Fahrers immer größer ist, als die Kraft des Stellgliedes.

4. Verfahren nach einem der vorigen Ansprüche, **dadurch gekennzeichnet, dass**
- im Rückkopplungszweig eine Filterung (24) durchgeführt wird.

5. Verfahren nach einem der vorigen Ansprüche, **dadurch gekennzeichnet, dass**
- im Rückkopplungszweig eine Gewichtung (25) durchgeführt wird.

6. Verfahren nach einem der vorigen Ansprüche, **dadurch gekennzeichnet, dass**
- ein Eingriff des Fahrers den Rückkopplungszweig unterbricht (23).

7. Vorrichtung zur Vermeidung einer ungewollten Schwingung für ein LKS-System,
- wobei eine Regelungsvorrichtung zur Fahrzeugquerführung (21)
- mit einem Begrenzungselement (22)
- über einen Rückkopplungspfad auf den Eingang der Regelungsvorrichtung verbunden ist
und
- eine Begrenzungsdifferenz (30)
- über einen Rückkopplungszweig
- derart auf die Sollkrümmung (26) der Fahrzeugtrajektorie wirkt,
**dadurch gekennzeichnet, dass**
- diese Sollkrümmung der maximal linear regelbaren Krümmung entspricht und
- das Begrenzungselement (22) derart gewählt wird, dass die Stellgröße (29) an die technischen Grenzen des Stellglieds für die Fahrzeugquerführung angepasst ist.

8. Vorrichtung nach Anspruch 7, **dadurch gekennzeichnet, dass**
- ein Filterungselement (24) im Rückkopplungszweig vorgesehen ist.

9. Vorrichtung nach einem der Ansprüche 7 und 8, **dadurch gekennzeichnet, dass**
- ein Gewichtungselement (25) im Rückkopplungszweig vorgesehen ist.

10. Vorrichtung nach einem der Ansprüche 7 - 9, **dadurch gekennzeichnet, dass**
- ein Unterbrechungselement (23) im Rückkopplungszweig unterbricht, welches bei Fahrereingriff betätigt wird.

## Claims

1. Method for avoiding instability/for stabilizing (14) a controller for a lane keeping support system,
- wherein control for vehicle lateral guidance (21)
- with a limitation (22)
- is fed back to a setpoint curvature (26) of the vehicle trajectory
and
- a limiting difference (30)
- acts via a feedback branch
- on the setpoint curvature (26) in such a way, **characterized in that**
- this setpoint curvature corresponds to the maximum linearly controllable curvature (13)
and
- the limitation (22) is selected in such a way that the manipulated variable (29) of the controller is adapted to the technical limits of the actuator element for the vehicle lateral guidance.

2. Method according to Claim 1, **characterized in that**
- the limitation (22) is selected in such a way that the manipulated variable (29) is adapted to the technical limits of the actuator element including a reserve.

3. Method according to one of the preceding claims, **characterized in that**
- the limitation (22) is selected in such a way that a steering force of the driver is always greater than the force of the actuator element.

4. Method according to one of the preceding claims, **characterized in that**
- filtering (24) is carried out in the feedback branch.

5. Method according to one of the preceding claims, **characterized in that**
- weighting (25) is carried out in the feedback branch.

6. Method according to one of the preceding claims, **characterized in that**
- intervention of the driver interrupts (23) the feedback branch.

7. Device for avoiding undesired oscillation for a lane keeping support system,
- wherein a control device for vehicle lateral guidance (21)
- with a limiting element (22)
- is connected via a feedback branch to the input of the control device,
and
- a limiting difference (30)
- acts via a feedback branch
- on the setpoint curvature (26) of the vehicle trajectory in such a way,
**characterized in that**
this setpoint curvature corresponds to the maximum linearly controllable curvature, and
- the limiting element (22) is selected in such a way that the manipulated variable (29) is adapted to the technical limits of the actuator element for the vehicle lateral guidance.

8. Device according to Claim 7, **characterized in that**
- a filter element (24) is provided in the feedback branch.

9. Device according to one of Claims 7 and 8, **characterized in that**
- a weighting element (25) is provided in the feedback branch.

10. Device according to one of Claims 7-9, **characterized in that**
- an interruption element (23) in the feedback branch interrupts, which interruption element (23) is activated in the event of a driver intervention.

## Revendications

1. Procédé pour éviter une instabilité/pour la stabilisation (14) d'un régulateur pour un système d'aide au suivi de voie,
- dans lequel une régulation pour le guidage transversal (21) du véhicule est rétro-couplée à
- une limitation (22)
- à une courbure de consigne (26) de la trajectoire du véhicule,
et
- une différence de limitation (30)
- agit par une branche de rétrocouplage
- de cette façon sur la courbure de consigne (26), **caractérisé en ce que**
- cette courbure de consigne correspond à la courbure réglable linéairement au maximum (13), et
- la limitation (22) est choisie de telle manière que la grandeur de réglage (29) du régulateur soit adaptée aux limites techniques de l'organe de réglage pour le guidage transversal du véhicule.

2. Procédé selon la revendication 1, **caractérisé en ce que** la limitation (22) est choisie de telle manière que la grandeur de réglage (29) soit adaptée aux limites techniques de l'organe de réglage, y compris une dérivation.

3. Procédé selon l'une quelconque des revendications précédentes, **caractérisé en ce que** la limitation (22) est choisie de telle manière qu'une force de direction du conducteur soit toujours plus grande que la force de l'organe de réglage.

4. Procédé selon l'une quelconque des revendications précédentes, **caractérisé en ce qu'**un filtrage (24) est effectué dans la branche de rétrocouplage.

5. Procédé selon l'une quelconque des revendications précédentes, **caractérisé en ce qu'**une pondération (25) est effectuée dans la branche de rétrocouplage.

6. Procédé selon l'une quelconque des revendications précédentes, **caractérisé en ce qu'**une intervention du conducteur interrompt la branche de rétrocouplage (23).

7. Dispositif pour éviter une oscillation involontaire d'un système d'aide au suivi de voie,
- dans lequel un dispositif de régulation pour le guidage transversal du véhicule (21) est relié à un élément de limitation (22) par un chemin de rétrocouplage à l'entrée du dispositif de régulation,
et
- une différence de limitation (30)
- agit par une branche de rétrocouplage
- de cette façon sur la courbure de consigne (26) de la trajectoire du véhicule,
**caractérisé en ce que**
- cette courbure de consigne correspond à la courbure réglable linéairement au maximum et
- l'élément de limitation (22) est choisi de telle manière que la grandeur de réglage (29) soit adaptée aux limites techniques de l'organe de réglage pour le guidage transversal du véhicule.

8. Dispositif selon la revendication 7, **caractérisé en ce qu'**il est prévu un élément de filtrage (24) dans la branche de rétrocouplage.

9. Dispositif selon l'une des revendications 7 ou 8, **caractérisé en ce qu'**il est prévu un élément de pondération (25) dans la branche de rétrocouplage.

10. Dispositif selon l'une quelconque des revendications 7 à 9, **caractérisé en ce qu'**un élément d'interruption (23), qui est actionné par une intervention du conducteur, interrompt la branche de rétrocouplage.
